# FASCICULE DE BREVET EUROPEEN

(11) **EP 1 215 353 B1**
(45) Date de publication et mention de la délivrance du brevet: **09.11.2005**
(21) Numéro de dépôt: 01108260.9
(22) Date de dépôt: 31.03.2001
(51) Int. Cl.: E04F 15/12, E04F 15/20, C04B 38/08, C04B 28/02

(54) **Sol flottant coupe-feu de classe A60, apte à amortir les vibrations et procédé d'application**
Schwimmender Brandschutzklasse-A60-Fussboden, geeignet zur Schwingungsdämpfung und Verfahren zur Durchführung
Floating fire-resistant class A60 floor, capable of damping vibrations and method for application

(30) Priorité: 14.12.2000 IT GE000139
(43) Date de publication de la demande: 19.06.2002
(73) Titulaire: IMPRESA MARINONI srl, 16152 Genova (IT)
(72) Inventeur: Ronco, Romeo, 16124 Genova (IT)
(74) Mandataire: Maritano Maello, Giovanna

(56) Documents cités:
- EP-A- 0 533 382
- AT-B- 252 093
- DE-A- 19 911 307
- DE-C- 4 429 785
- FR-A- 2 502 632
- GB-A- 2 029 393
- DATABASE WPI Week 199424 Derwent Publications Ltd., London, GB; AN 1994-197853 XP002275881 & SE 9 202 882 A (NOBEL PAINT & ADHESIVES) 3 avril 1994 (1994-04-03)
- DATABASE WPI Week 199716 Derwent Publications Ltd., London, GB; AN 1997-166454 XP002275882 & CN 1 092 798 A (TANGGU DECK COMPOSITION FACTORY TANJIN) 28 septembre 1994 (1994-09-28)
- CHEMICAL ABSTRACTS, vol. 105, no. 26, 29 décembre 1986 (1986-12-29), Columbus, Ohio, US; abstract no.: 231524b, page 299 XP0000061516 & DD 236 300 A (H. KAPS, ET AL.) 4 juin 1986 (1986-06-04)
- CHEMICAL ABSTRACTS, vol. 104, no. 18, 5 mai 1986 (1986-05-05), Columbus, Ohio, US; abstract no.: 154687g, page 364 XP0000183164 & JP 60 251160 A (F. NAKAYAMA, ET AL) 11 décembre 1985 (1985-12-11)

## Description

La présente invention concerne un sol flottant coupe-feu de classe A60, apte à amortir les vibrations, ainsi que son procédé d'application.

Selon la technique connue, à bord des navires sont réalisés des sols flottants, dans le but d'isoler les locaux aussi bien du point de vue acoustique qu'en ce qui concerne les vibrations, en particulier dans le cas de zones bruyantes, comme celles à proximité des hélices et sur les ponts inférieurs du navire.

Dans ce but, selon la technique connue, sont utilisées des dalles rectangulaires réalisées préalablement en tôle zinguée, en forme de boîtier, sans base d'où sort la laine de roche qui est comprimée à l'intérieur et que l'on pose sur le pont. Lesdites dalles, dont les dimensions sont généralement 120x60 cm., sont posées de façon à ce qu'elles soient adjacentes et soudées les unes aux autres et, en dernier lieu, recouvertes par un revêtement cimentaire et non.

Les inconvénients rattachés à ce type de sol connu sont nombreux.

Le premier inconvénient est dû au poids, qui est considérable à cause de la présence de la tôle.

Le deuxième inconvénient est représenté par la tendance à faire casser le revêtement cimentaire à cause du manque d'absorption des irrégularités du pont. En effet, à bord des navires, les surfaces des ponts ne sont pas plates et les dalles, qui sont rigides, ne peuvent pas suivre complètement leur profil ondulé. Par conséquent, le sol - lorsqu'il est soumis à des contraintes par compression - a tendance à céder aux points où les dalles ne sont pas parfaitement posées sur le pont.

Le troisième inconvénient est dû au fait que si le pont est inondé, tout le sol devra être remplacé, étant donné que l'eau s'infiltre dans les interstices des dalles pour arriver jusqu'à la laine de roche qui, lorsqu'elle est mouillée, perd ses propriétés et s'affaisse à cause des collants qu'elle contient. Par ailleurs, il est assez fréquent que des inondations se forment sur cette typologie de sol, étant donné qu'elle est principalement réalisée sur les ponts inférieurs, avant que les travaux de finition du navire soient effectués. Cela peut se produire, par exemple, pendant le pressage des tuyauteries ou bien lorsque survient une averse alors que les dalots ne sont pas achevés.

Un ultérieur inconvénient de ce type de sol connu est constitué par la difficulté d'installation, à cause des soudures devant être effectuées et des fréquentes coupes sur mesure des dalles, ce qui provoque une augmentation des coûts.

Dans le but d'éliminer ces inconvénients, selon la technique connue, un sol continu a été utlisé, constitué par un support élastique mais suffisamment dense pouvant toutefois supporter des charges ponctuelles, telles que les éléments d'agencement du navire (voir cabines), sur lequel est appliqué un mélange composite à base d'oxyde de magnésium et de chlorure de magnésium, qui ont le but de rendre le mélange élastique.

Un inconvénient important dérivant de l'emploi d'un mélange à base d'oxyde de magnésium et de chlorure de magnésium est dû au fait que, en présence de l'eau - qui malheureusement, comme nous l'avons vu, est souvent présente - il présente des renflements. Ce renflement n'est pas suffisamment contrasté par les éventuelles fibres compressibles. En outre, comme nous l'avons déjà dit, ce type de sol est généralement réalisé sur les ponts les plus bas et, lorsqu'il faut démolir le sol et le refaire totalement, à cause des renflements, le navire est en phase d'armement avancé, toutes les ouvertures du bordé ont été fermées par les hublots, les cabines ont été construites sur ledit sol et, pour ces motifs, se créent des situations difficiles et compliquées, aussi bien pour l'approvisionnement que pour l'évacuation des décombres. En outre, cette solution s'est révélée plutôt rigide et non totalement apte à être soumise aux déformations du navire.

Un autre inconvénient de ce mélange connu est représenté par le fait qu'il doit être opportunément dosé sur place, ce qui donne lieu à des complications.

Un ultérieur inconvénient grave de ce mélange connu est constitué par le fait que le chlorure de magnésium est nocif; en effet, en cas de combustion, il est susceptible de générer du chlore libre, qui est un gaz toxique.

Le brevet D4429785 décrit un système de revêtement pour sols en mortier de ciment, qui comprend une couche flottante élastique, posée sur le sol réalisée avec un ou plusieurs liants inorganiques, un polymère organique compatible avec le ciment et, éventuellement, des charges organiques ou inorganiques et une couche de couverture constituée par un ou plusieurs liants inorganiques et éventuellement des polymères, compatibles avec le ciment, et des agrégats inorganiques. Il s'agit d'un revêtement devant être effectué sur des sols en mortier de ciment, c'est-à-dire dans le domaine du bâtiment civil. Il ne convient pas à l'emploi dans le domaine naval et il ne possède pas les caractéristiques requises pour amortir les vibrations.

Dans le brevet SE9202882 est décrite une composition sèche pour mortier et son emploi pour préparations légères et à haute résistance sur structures fixes, par exemple pour les sols dans le secteur naval, constituée par un agent liant, des charges, des granules en verre expansé, ayant un noyau poreux et une surface imperméable. Cependant, même ce brevet ne possède pas de caractéristiques particulières pour amortir les vibrations et le montage particulier pour un sol flottant n'est pas prévu.

Le brevet EP0533382A1 concerne un panneau isolant en fibres minérales équipé d'un revêtement qui contient des particules minérales liées à du ciment alcalin de laitier. L'emploi dudit panneau est prévu en tant qu'isolant dans le domaine civil. En outre, il s'agit de panneaux, et non pas d'un sol continu, apte à fournir à des locaux dans le domaine naval une isolation appropriée, aussi bien du point de vue acoustique qu'en ce qui concerne les vibrations.

Ensuite, on a la composition destinée au revêtement des ponts des navires décrite dans le brevet FR2502632. Il s'agit d'une composition cimentaire qui est appliquée directement sur les ponts, en étalant le produit sur toute la surface du sol. Elle ne prévoit aucune couche isolante pour obtenir une isolation aussi bien du point de vue acoustique qu'en ce qui concerne les vibrations. Ce type de sol a pour seul but de résister à la propagation des flammes et à aux émanations de fumées toxiques. Tous les inconvénients mentionnés ont été éliminés en adoptant le sol flottant, selon la présente invention.

Le but de la présente invention est de réaliser un sol flottant qui amortisse les vibrations, flexible, coupe-feu de classe A60, dont la mise en oeuvre soit aisée, qui ne présente aucun renflement en présence d'eau et qui ne présente pas les inconvénients indiqués ci-dessus, propres aux sols connus.

Dans ce but, nous avons réalisé un sol constitué par une couche en laine de roche recouverte par une couche continue et imperméable, d'une nature cimentaire particulière, composé par un matériau pré-malaxé à un seul composant, sans magnésium ni chlorure.

Certains des nombreux avantages que l'on obtient avec la présente invention sont les suivants.

Le sol obtenu avec le matériau pré-malaxé à un seul composant, selon la présente invention, est élastique tout en possédant une résistance à la compression telle que le sol ne se casse pas, même en cas de charges concentrées, par exemple: panneaux diviseurs des cabines, fixés sur celui-ci.

Etant donné que le matériau pré-malaxé fourni est à un seul composant, il n'est pas nécessaire de doser chaque quantité des composants, à l'encontre de ce qui est nécessaire selon la technique connue, mais il suffit d'y ajouter uniquement l'eau nécessaire au moment de son emploi.

Un avantage ultérieur du sol obtenu avec le matériau pré-malaxé à un seul composant, selon la présente invention, est constaté du point de vue sanitaire, étant donné qu'il ne contient pas d'halogènes; par conséquent, il est approprié pour être utilisé même à bord des navires, où il faut présenter des fiches de sécurité relatives aux matériaux utilisés.

Le matériau pré-malaxé à un seul composant qui est utilisé pour la couche cimentaire du sol, selon la présente invention, est constitué par les éléments suivants:
- liants cimentaires inorganiques,
- agents assouplissants,
- charges inertes.

Les agents assouplissants interagissent avec les liants cimentaires et ils ont la fonction de les rendre plus élastiques, pour éviter toute cassure non souhaitée.

Avantageusement, les liants cimentaires inorganiques sont constitués par des mélanges de ciments aluminates et pouzzolaniques, ayant une résistance à la compression correspondant à 425 Kg/cm². Les agents assouplissants sont constitués par des résines élastomères et acryliques, c'est-à-dire par des matériaux acryliques et des fibres synthétiques en polypropylène, ayant une longueur de 15 mm. Les charges inertes sont constituées par des produits microcellulaires expansés, vitreux ou inorganiques, des charges aluminates et des charges super-allégées de différentes granulométries.

Selon une réalisation préférée, les matériaux acryliques utilisés peuvent être, par exemple, ceux qui sont connus sous la dénomination commerciale de NEOLITH. Les charges inertes microcellulaires expansées utilisées peuvent être celles qui sont connues sous la dénomination commerciale de LECA. Les charges super-allégées utilisées peuvent être celles connues sous la dénomination commerciale de PORAVER.

Tous les avantages susdits et d'autres encore, apparaîtront évidents dans la description des figures suivantes, jointes uniquement à titre d'illustration et non pas limitatif, dans lesquelles:

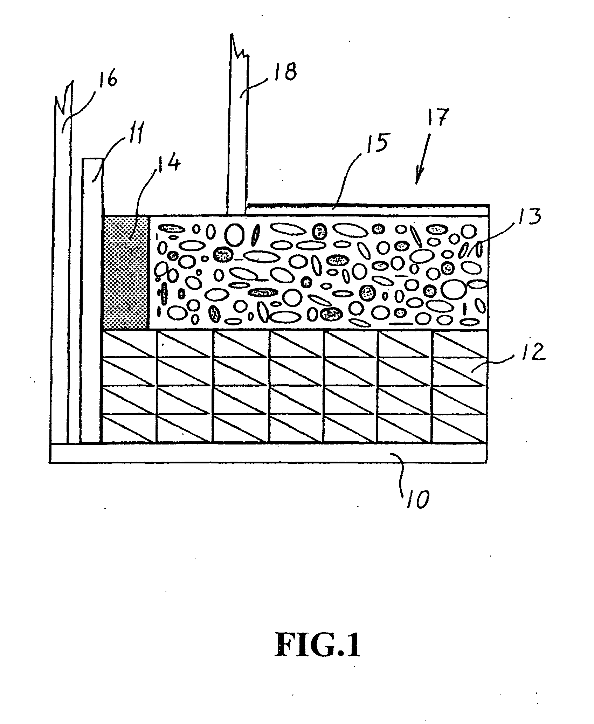

la fig.1 illustre la section d'un exemple de la disposition des matériaux, selon la présente invention.

Pour obtenir un sol flottant et isolant optimal, il faut que celui-ci soit continu et qu'il ne soit pas électro-circuité, c'est-à-dire qu'il doit être isolé du bruit, par rapport à tout ce qui le surmonte et tout ce qui l'entoure.

Autour du pont 10, il y a les cloisons 16, soudées au pont 10 mais, pour éviter que le sol 17 entre en contact avec la cloison 16, est prévue la mise en oeuvre d'un étambrai de limitation périmétrale métallique vertical 11, scellé de façon à assurer une parfaite étanchéité, de sorte que le sol 17 reste limité et retenu à l'intérieur de celui-ci et qu'il soit isolé par rapport à la cloison 16.

Le sol 17 est essentiellement constitué par une couche en laine de roche 12 et par une couche cimentaire continue 13 qui le surmonte.

Sur la tôle du pont 10, jusqu'à atteindre latéralement l'étambrai de limitation 11, est posée une couche de panneaux en laine de roche 12. Sur la laine de roche 12, adjacente à l'étambrai 11, on place une éponge 14 qui a la fonction d'absorber les éventuels mouvements de la couche cimentaire 13 et de l'isoler, du point de vue acoustique, par rapport à l'étambrai de limitation 11.

Ladite éponge 14 est constituée par un matériau expansé insonore, type polystyrène.

Sur la laine de roche 12, à l'intérieur des éponges 14, est coulé le mélange obtenu avec le produit pré-malaxé à un seul composant, mélangé avec de l'eau, destiné à constituer la couche cimentaire 13.

Tout ce qui surmonte le sol 17, comme par exemple les panneaux diviseurs 18 des cabines, est cloué ou collé sur la couche cimentaire 13.

La laine de roche 12, en fonction des nécessités, peut être agglomérée et fermée ensemble par de la colle ou bien agglomérée et étirée par des machines spécialement prévues à cet effet.

Selon une réalisation particulière, l'épaisseur de la couche en laine de roche 12 est de 40 mm, et sa densité est de 140 Kg/m³, l'épaisseur de la couche cimentaire 13 est de 25 mm,

Sur la couche cimentaire 13, on pose un produit de finition 15, tel qu'une moquette ou similaires.

## Revendications

1. Sol flottant (17), prévu pour être utilisé sur le pont (10) d'un navire, qui comprend une couche cimentaire (13), continue et imperméable, composée par un matériau pré-malaxé à un seul composant, sans magnésium ni chlorure **caractérisé par le fait que** sous la couche cimentaire est appliquée une couche en laine de roche (12) et que le matériau pré-malaxé à un seul composant est constitué par les éléments suivants:
- liants cimentaires inorganiques constitués par des mélanges de ciments aluminates et pouzzolaniques, avec résistance à la compression correspondant à 425 Kg/cm²,
- agents assouplissants constitués par des résines élastomères et acryliques ou par des matériaux acryliques et des fibres synthétiques en polypropylène, ayant une longueur de 15 mm
- charges inertes constituées par des produits microcellulaires expansés, vitreux ou inorganiques, par des charges aluminates et par des charges super-allégées de différentes granulométries.

2. Sol flottant (17), selon la revendication 1, **caractérisé par le fait que** les matériaux acryliques utilisés sont ceux connus sous la dénomination commerciale de NEOLITH, que les charges inertes microcellulaires expansées utilisées sont celles connues sous la dénomination commerciale de LECA, que les charges super-allégées utilisées sont celles connues sous la dénomination commerciale de PORAVER.

3. Sol flottant (17), selon la revendication 1, **caractérisé par le fait qu'**on a prévu la mise en oeuvre d'étambrais de limitation périmétraux métalliques verticaux (11), scellés de façon à assurer une parfaite étanchéité sur la tôle du pont (10), dans les limites desquels le sol (17) reste limité, retenu et isolé par rapport aux cloisons (16), et **par le fait qu'**en position adjacente à l'étambrai de limitation périmétrale (11) on place une éponge (14) constitué par un matériau expansé insonore, type polystyrène.

4. Sol flottant (17) selon la revendication 1, **caractérisé par le fait que** tout ce qui surmonte le sol (17), est cloué ou collé sur la couche cimentaire (13).

5. Sol flottant (17) selon la revendication 1, **caractérisé par le fait que** la laine de roche (12) est agglomérée et fermée ensemble par de la colle, ou bien agglomérée et étirée par des machines spécialement prévues à cet effet.

6. Sol flottant (17), selon la revendication 1, **caractérisé par le fait que** l'épaisseur de la couche en laine de roche (12) est de 40 mm, et que sa densité est de 140 Kg/m³, que l'épaisseur de la couche cimentaire (13) est de 25 mm.

7. Procédé d'application du sol flottant (17), selon la revendication 1, **caractérisé par le fait que** sur la tôle du pont (10), jusqu'à atteindre latéralement l'étambrai de limitation (11), on pose une couche de panneaux en laine de roche (12), que sur la laine de roche (12), adjacente à l'étambrai de limitation périmétrale (11), on place une éponge (14), que sur la laine de roche (12), à l'intérieur des éponges (14), est coulé le mélange obtenu avec le matériau pré-malaxé à un seul composant, mélangé avec de l'eau, destiné à constituer la couche cimentaire (13).

## Patentansprüche

1. Schwimmender Fußboden (17) zur Verwendung auf dem Deck (10) von Schiffen, der eine Schicht Zementfließestrich (13) umfasst, durchgehend und undurchlässig, bestehend aus einem vorgemischten EinkomponentenMaterial, ohne Magnesium oder Chlorid, **gekennzeichnet durch** die Tatsache, dass sich unter der Zementschicht eine Schicht Gesteinswolle (12) befindet und dass das vorgemischte Einkomponentenmaterial aus den folgenden Elementen besteht:
- anorganische Zementbindemittel, bestehend aus Aluminium- und Puzzolanzementmischungen, mit einer Druckfestigkeit von 425 kg/cm²,
- Fließmittel, bestehend aus Elastomer- oder Acrylharzen oder Acrylmaterialien und synthetischen Fasern aus Polypropylen mit einer Länge von 15 mm.
- inerte Zuschlagstoffe, bestehend aus mikrozellularen geschäumten, glasartigen oder anorganischen Produkten, aus aluminierten Zuschlagstoffen und Leichtzuschlagstoffen verschiedener Granulometrie.

2. Schwimmender Fußboden (17) gemäß Patentanspruch 1, **gekennzeichnet durch** die Tatsache, dass die verwendeten Acrylmaterialien im Handel unter der Bezeichnung NEOLITH bekannt sind, dass die mikrozellularen inerten Zuschlagmaterialien im Handel unter der Bezeichnung LECA bekannt sind, dass die verwendeten Leichtzuschlagstoffe im Handel unter der Bezeichnung PORAVER bekannt sind.

3. Schwimmender Fußboden (17) gemäß Patentanspruch 1, **gekennzeichnet durch** die Tatsache, dass die Verlegung von vertikalen Begrenzungselementen aus Metall (11) vorgesehen ist, die so versiegelt werden, dass sie einen perfekten Halt auf der Platte des Decks (10) gewährleisten, und innerhalb derer der Fußbodenbelag (17) in Übereinstimmung mit den Scheidewänden (16) begrenzt, eingefasst und isoliert bleibt, und von der Tatsache, dass sich neben dem Begrenzungselement (11) ein Schwamm (14) befindet, der aus einem schalldämpfendem geschäumtem Material in der Art von Polystyrol besteht.

4. Schwimmender Fußboden (17) gemäß Patentanspruch 1, **gekennzeichnet durch** die Tatsache, dass alles, was sich oberhalb des Fußbodens (17) befindet, auf dem Zementfließestrich (13) festgenagelt und angeklebt wird.

5. Schwimmender Fußboden (17) gemäß Patentanspruch 1, **gekennzeichnet durch** die Tatsache, dass die Gesteinswolle (12) gesintert und verklebt oder gesintert und **durch** Spezialmaschinen gestreckt wurde.

6. Schwimmender Fußboden (17) gemäß Patentanspruch 1, **gekennzeichnet durch** die Tatsache, dass die Dicke der Schicht Gesteinswolle (12) 40 mm beträgt und ihre Dichte 140 kg/m³ beträgt und dass die Dicke des Zementfließestrichs (13) 25 mm beträgt.

7. Aufbringungsverfahren des schwimmenden Fußbodens (17) gemäß Patentanspruch 1, **gekennzeichnet durch** die Tatsache, dass auf der Platte des Decks (10) bis zum seitlichen Erreichen des äußeren Begrenzungselements (11) eine Schicht Gesteinswolleplatten (12) verlegt wird, dass sich oberhalb der Gesteinswolle (12) neben dem äußeren Begrenzungselement (11) ein Schwamm (14) befindet, dass auf die Gesteinswolle (12) innerhalb der Schwämme (14), die Mischung gegossen wird, die aus dem vorgemischten Einkomponentenmaterial, vermischt mit Wasser, gewonnen wird und die dazu bestimmt ist, den Zementfließestrich (13) zu bilden.

## Claims

1. Floating floor (17), designed to be used on vessel decks (10), which features a seamless and water-proof cement layer (13), consisting of a premixed single component material, containing no magnesium nor chloride, **characterized by** the fact that, under the cement layer, a layer of rock wool (12) is applied, and that the premixed single component material consists of the following elements:
- inorganic cement binders, consisting of alumina and pozzolan cement mixtures with 425 Kg/cm² compression strength,
- flexibility-enhancing agents, consisting of elastomeric and acrylic resins or of acrylic materials and polypropylene synthetic fibers of 15 mm length.
- inert fillers consisting of micro-cellular foamed, vitreous or inorganic products, and alumina and super-light fillers having different particle sizes.

2. Floating floor (17) according to claim 1, **characterized by** the fact that the acrylic materials employed are those known under the brand name of NEOLITH, that the inert micro-cellular foamed fillers are those known under the brand name of LECA, and that the super-light fillers employed are those known under the brand name of PORAVER.

3. Floating floor (17) according to claim 1, **characterized by** the fact that vertical and perimetral metal containment coamings (11) are envisaged duly sealed to ensure perfect water-proofing of the deck plate (10), coamings which ensure proper bordering, containment, and insulation of the flooring (17) from bulkheads (16), and by the fact that adjacent to the perimetral containment coaming (11) a sponge is placed (14) consisting of foamed sound-absorbing material, like polystyrene.

4. Floating floor (17) according to claim 1, **characterized by** the fact that anything above the flooring (17) is either nailed or glued onto the cement layer (13).

5. Floating floor (17) according to claim 1, **characterized by** the fact that the rock wool (12) is either compacted and glued together or compacted and stretched by appropriate devices.

6. Floating floor (17) according to claim 1, **characterized by** the fact that the wool rock layer (12) has 40 mm thickness and 140 Kg/m³ density, and that the cement layer (13) is 25 mm thick.

7. Method to apply the floating floor (17) according to claim 1, **characterized by** the fact that a layer of rock wool panels (12) is laid on the deck plate (10) up to the containment coaming (11) on the side, that on top of the wool rock (12) a sponge (14) is placed adjacent to the perimetral containment coaming (11), that on the wool rock (12), inside the sponge layer (14), the mixture is cast obtained with the premixed single component material mixed with water, to form the cement layer (13).
